# EUROPEAN PATENT SPECIFICATION

(11) **EP 4 365 757 B1**
(45) Date of publication and mention of the grant of the patent: **15.07.2026**
(21) Application number: 21947976.3
(22) Date of filing: 26.10.2021
(51) Int. Cl.: G06T 7/246, G06F 18/00, G06F 18/40, G06V 20/40

(54) **METHOD AND APPARATUS FOR ANALYZING POSITIONAL RELATIONSHIP BETWEEN TARGET OBJECTS, AND STORAGE MEDIUM AND ELECTRONIC DEVICE**
VERFAHREN UND VORRICHTUNG ZUR ANALYSE DER POSITIONSBEZIEHUNG ZWISCHEN ZIELOBJEKTEN SOWIE SPEICHERMEDIUM UND ELEKTRONISCHE VORRICHTUNG
PROCÉDÉ ET APPAREIL D'ANALYSE DE RELATION DE POSITION ENTRE DES OBJETS CIBLES, SUPPORT DE STOCKAGE ET DISPOSITIF ÉLECTRONIQUE

(30) Priority: 29.06.2021 CN 202110726426
(43) Date of publication of application: 08.05.2024
(73) Proprietor: Hangzhou Hikvision System Technology Co., Ltd., Hangzhou, Zhejiang 310051 (CN)
(72) Inventor: MAO, Chenqing, Hangzhou, Zhejiang 310051 (CN); LIU, Mingyang, Hangzhou, Zhejiang 310051 (CN); YANG, Haizhou, Hangzhou, Zhejiang 310051 (CN); LIANG, Chenhua, Hangzhou, Zhejiang 310051 (CN); XIANG, Hengguang, Hangzhou, Zhejiang 310051 (CN); ZHOU, Jianbo, Hangzhou, Zhejiang 310051 (CN)
(74) Representative: Epping - Hermann - Fischer
(86) International application number: PCT/CN2021/126425
(87) International publication number: WO 2023/273049

(56) References cited:
- CN-A- 104 093 001
- CN-A- 104 093 001
- CN-A- 110 111 238
- CN-A- 110 111 238
- CN-A- 113 014 817
- CN-A- 113 014 817
- CN-A- 113 313 075
- US-A1- 2018 357 472

## Description

The present application claims priority to Chinese patent application No. 202110726426.5, entitled "Method and Apparatus for Analyzing Positional Relationship between Target Objects, Storage Medium and Electronic Device" and filed with China National Intellectual Property Administration on June 29, 2021.

### Technical Field

The present application relates to the field of video image processing, in particular to a method for analyzing a positional relationship between target objects, a non-volatile computer-readable storage medium, an electronic device and a computer program product.

### Background

With the increasing development of science and technology, it has become increasingly common for people to use video materials as auxiliary recording tools. For a specific event, the requirements for the definition of on-site images related to the event recorded by the video materials, the diversity of target objects, and the reducibility of positional relationship between target objects are becoming increasingly high. However, in some cases, due to limitations in natural environmental conditions such as time and weather and the like, as well as limitations in the installation angle of a camera device and its own hardware performance, the following issues may exist in the captured video:
(1) insufficient definition of the image at critical moments;
(2) failed to include all information related to the event.

Due to the above issues, multiple target objects related to the event cannot be displayed simultaneously in a single video, and staff cannot obtain the positional relationship between these multiple target objects from the single video, thereby failing to understand the true process of the event.

The technology in US 2018/0357472 A1 enables viewing, analyzing, and improve a variety of motions for a subject by facilitating comparison to a target video. Motions can include activities such as walking, athletic activities, and educational activities. The comparison can be accomplished by adjusting spatial aspects of a target and subject video to match. The comparison can also include identifying synchronization points, between the videos, that identify a temporal correspondence between of motions or objects in the videos and adjusting playback of one or more segments in the videos so corresponding synchronization points are displayed at the same time during playback. A version of one of the videos can be provided as an outline or as partially transparent, which can be overlaid with the other video to create a video combination for playback.

CN104093001A discloses an online dynamic video compression method. According to the method, the traditional video abstraction technology is improved a lot and is inherited and developed. By the adoption of the method, target bodies and events which people are interested in can be automatically extracted from a large number of monitoring videos; the information such as positions and velocities of the target bodies in each frame of the monitoring videos is obtained by tracking the target bodies; the target bodies appearing in different time periods are extracted respectively and temporarily stored in a moving target list; after an appropriate background is selected, the stored target bodies are spliced into the same background one by one. Consequently, the visual effect that the target bodies appearing in different time periods are simultaneously displayed in the same time period is achieved, and the purpose of dynamic video compression is achieved.

### Summary

An object of embodiments of the present application is to provide, in response to problems existing in the art, a method and an apparatus for analyzing a positional relationship between target objects, a storage medium and an electronic device, which can solve the problem that multiple target objects related to an event cannot be displayed simultaneously in a single video, and staff cannot obtain a positional relationship between these multiple target objects from the single video.

The invention is set out in the appended set of claims. With the technical solutions proposed in the embodiments of the present application, multiple videos containing the same target spatial area and each containing one or more target objects are fused, so that the fused synthesized video simultaneously displays the position changes in the target spatial area of multiple target objects existing in the same target spatial area, thereby identifying from a single video the position relationship between the multiple targets in the target spatial area. Specifically, in the embodiments of the present application, the positional relationship between the target objects in the target spatial area is analyzed by monitoring the change in the feature parameter of the target image corresponding to each target object in the synthesized video over time sequence.

Of course, it is not necessary for any product or method of the disclosure to achieve all the advantages described above at the same time.

### Brief Description of the Drawings

In order to make the technical solutions and advantages more clearly, embodiments of the present application will be described in detail below with reference to the appended drawings. The accompanying drawings in the following description show merely some embodiments of the present application, and those skilled in the art may also obtain other accompanying drawings based on these accompanying drawings without any creative efforts.
FIG. 1 is a schematic view of an implementation environment provided by an embodiment of the present application;
FIG. 2 is a schematic flowchart of a method for analyzing a positional relationship between target objects provided by an embodiment of the present application;
FIG. 3 is a schematic view of a sub-step S2 provided by an embodiment of the present application;
FIG. 4 is a schematic view of a sub-step S3 provided by an embodiment of the present application;
FIG. 5 is a schematic structure view of an apparatus for analyzing a positional relationship between target objects provided by an embodiment of the present application.
FIG. 6 is a schematic effect view of a plane transformation provided by an embodiment of the present application;
FIG. 7 is a schematic physical structure view of an electronic device provided by an embodiment of the present application.

### Detailed Description

The technical solutions of the embodiments of the present application will be described in detail below with reference to the appended drawings more clearly. Obviously, the embodiments described are only some, and not all, of the embodiments of the present application. The invention is defined by the appended claims. When the following description refers to the drawings, unless otherwise indicated, the same number in different drawings represent the same or similar element. The terms such as "first", "second", "third" and the like (if any) in the description, claims and drawings of the present application are used to distinguish similar objects, and are not used to describe a specific order or sequence. It should be understood that the objects used in this way can be interchanged in appropriate cases. In addition, the terms "include" and "have", as well as any variations thereof, are intended to encompass non-exclusive inclusions. In the description of the present application, "multiple" means two or more, unless otherwise specified. In the description of the present application, it should be understood that unless otherwise specified and limited, the terms "install", "communicate", and "connect" should be broadly understood, which for example can be fixed connection, detachable connection, or integral connection; can be mechanical connection, electrical connection, or communication with each other; can be directly connected or indirectly connected through an intermediate medium; can be internal connection between two elements or interaction relationship between two elements. For a person of ordinary skill in the art, specific meanings of the above terms in the present application can be understood based on specific circumstances.

Before providing a detailed explanation of the method for analyzing the positional relationship between the target objects provided by the embodiment of the present application, an implementation environment provided by the embodiment of the present application will be introduced first.

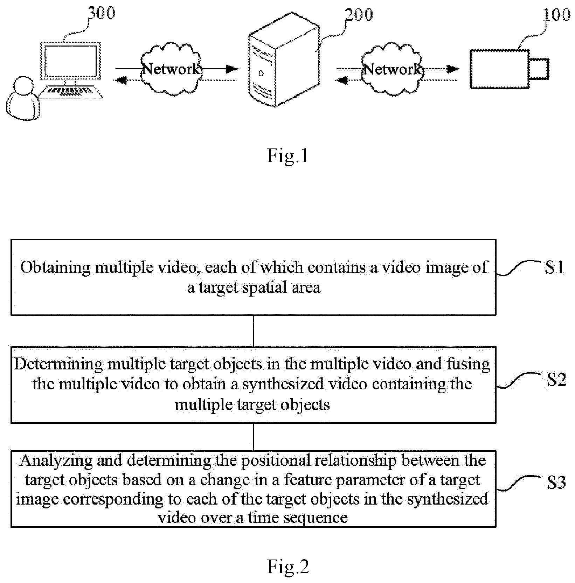

Refer to Fig. 1, which is a schematic view of an implementation environment shown according to an exemplary embodiment. The implementation environment includes at least one camera 100, server 200, and terminal 300. The camera 100 can communicate with the server 200 through a network, and the server 200 can communicate with the terminal 300 through the network. The communication can be wired or wireless, which is not limited in the embodiments of the present application.

The camera 100 is used to capture a video containing the target objects and send the video to the server 200.

The target objects include one or more of humans, animals, motor vehicles, non-motor vehicles, plants, buildings, urban public facilities, etc.

The server 200 is used to receive the video sent by the camera 100 and further transmit the video to the terminal 300. The server 200 can be a single server, a cluster of multiple servers, or a cloud computing service center.

The terminal 300 can be any electronic product that can interact with users through one or more methods such as a keyboard, a display, a touchpad, a touch screen, a remote control, a voice interaction or a handwriting device. For example, The terminal 300 can be a Personal Computer (PC), a mobile phone, a smartphone, a Personal Digital Assistant (PDA), a wearable device, a Pocket PC (PPC), a tablet computer, a smart In-Vehicle Infotainment, a smart TV, a smart speaker, etc.

For example, the terminal 300 displays, through its display, the received video to the user. The user previews the video content through the display of the terminal 300, and then takes desired video clips according to actual needs, and determines the positional relationship between the target objects according to the method provided in the embodiment of the present application.

The method for analyzing a positional relationship between target objects provided in the embodiment of the present application will be further described in detail below.

For example, refer to Fig. 2, which is a schematic flowchart of the method for analyzing a positional relationship between target objects provided in the embodiment of the present application. The method includes the following steps:
S1: Obtaining multiple video, each of which contains a video image of a target spatial area;
In this step, the target spatial area can be a certain area in the actual space, and the target spatial area can be set according to actual needs. For example, when it is necessary to analyze the positional relationship between multiple target objects that exist simultaneously at an intersection, multiple videos containing the intersection can be obtained, and the target objects that need attention can be obtained through these multiple video. For example, a first target object that needs attention is obtained through a first video of the intersection captured at night. Due to the insufficient definition of the first video of the intersection captured at night, a second target object that needs attention cannot be obtained through the first video. Therefore, the second target object needs to be obtained from other videos of the intersection. For example, the other videos can be a second video of the intersection captured during the day, and the second target object is obtained in the second video. The target spatial area, first video, and second video can be selected according to actual needs, which are not limited in the embodiments of the present application.

S2: Determining multiple target objects in the multiple video and fusing the multiple video to obtain a synthesized video containing the multiple target objects;
In this step, the target objects can be automatically identified in the multiple video, such as the target objects belonging to a preset target object type are automatically identified based on the preset target object type. For example, the target object type is people, cars, facilities on the road, etc. The concerned target objects, that need to be analyzed, can also be determined in the multiple videos through manual annotation. Of course, a combination of automatic identification and manual annotation can also be used to determine the target objects that needs to be analyzed. Further, by fusing the videos, the multiple target objects that exist in different videos are synthesized into a single synthesized video.

Furthermore, in the scheme of automatically identifying the target objects mentioned above, a target object that needs to be analyzed in the various identified target objects can be determined as a target object to be analyzed.

S3: analyzing and determining the positional relationship between the target objects based on a change in a feature parameter of a target image corresponding to each of the target objects in the synthesized video over a time sequence.

With the technical solution proposed in the embodiment of the present application, the multiple video containing the same target spatial area and each containing one or more target objects are fused, so that the fused synthesized video simultaneously displays the position changes in the target spatial area of multiple target objects existing in the same target spatial area. The positional relationship between the target objects in the target spatial area can be analyzed by monitoring the change in the feature parameter of the target image corresponding to each of the target objects in the synthesized video over the time sequence, such that the positional relationship between the multiple targets in the target spatial area can be identified in a single video.

In some embodiments of the present application, the multiple video containing the target spatial area can be obtained from videos recorded by the same camera device, or from videos recorded by different camera devices according to actual situations.

For example, three camera devices capture videos of the target spatial area from three different perspectives. Due to the presence of obstructions, the video captured by each camera device cannot fully cover the target object to be analyzed. However, the videos recorded from three different perspectives can be complementary to each other. Therefore, by performing coordinate transformation and other processing on the above videos from three perspectives and then fusing the videos, a synthesized video containing all the target objects to be analyzed can be obtained.

The following provides an exemplary description of the method for analyzing a positional relationship between target objects provided in the embodiment of the present application in an application scenario.

For a first event in which the whereabouts of the target object needs to be determined, first, it is necessary to determine the target spatial area to be analyzed. One way is to understand the approximate occurrence time of the first event and the approximate behavior of the first target object, such as a key person, before the first event occurs, and determine an area where the key person last appeared before the first event occurs by browsing video recordings along the way, and set this area as the target spatial area.

Subsequently, it is necessary to determine multiple videos containing the target spatial area. One way is to take, based on the approximate occurrence time of the first event, a first video containing the target spatial area and the occurrence time of the event, where the first video includes partial images of the key person. Since the first event occurred at night, due to the limited light, the definition of the first video is low and other target objects in the target spatial area cannot be identified. Based solely on the first video, the whereabouts of the key person still cannot be determined.

In order to analyze the relationship between the key person and other target objects in the target spatial area, it is necessary to acquire a second video containing the same target spatial area. Optionally, the second video was recorded during the day with sufficient lighting and clearer outlines of oncoming and outgoing vehicles, pedestrians, and environmental public facilities in the video. However, the key person did not appear in the second video.

Subsequently, the first and second videos mentioned above are uploaded to an electronic device with human-computer interaction function, and an instruction is sent to trigger the electronic device to execute relevant calculation programs to carry out the operations in the method for analyzing a positional relationship between target objects provided in the present embodiment, and further determine the whereabouts of the key person.

Specifically, the method for analyzing the positional relationship between the target objects includes:
S1: Obtaining multiple videos, each of which contains a video image of a target spatial area;
In the embodiment, the multiple videos include the first and second videos mentioned above.

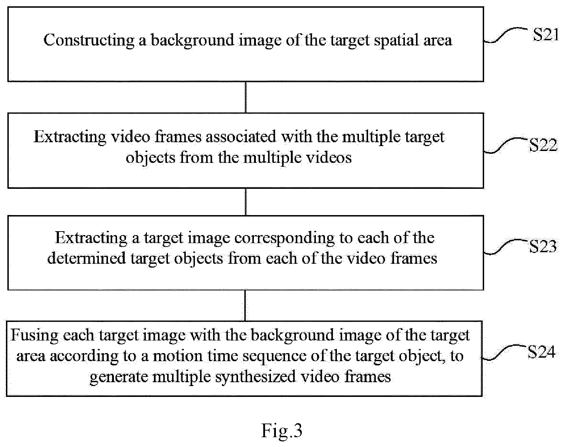

S2: Determining multiple target objects in the multiple videos and fusing the multiple videos to obtain a synthesized video containing the multiple target objects;
In S2, please refer to Fig. 3. In the embodiment, the following operations are performed on the obtained first and second videos:
S21: Constructing a background image of the target spatial area;
After determining the multiple target objects that need to be analyzed in the multiple videos, respective video frames containing the target objects can be obtained. The background image can be pre-constructed, and then the respective video frames for all target objects can be fused in this background image, so that the position change relationships for all target objects are displayed simultaneously in the synthesized video, thereby identifying the positional relationship between the target objects.

Optionally, a preset background image of the target spatial area can be used, such as a preset original video clip of the target spatial area that meets the requirements for definition or contains original environmental information that meets requirements. After fusing respective video frames for the target objects into the original video clip, the position change of each target object can be clearly reflected, thus enabling to identify the positional relationship between the target objects. For example, assuming that the multiple videos are all captured on a rainy day and contain the target spatial region, the target objects that need to be analyzed are determined in these multiple videos respectively. Due to the unsatisfactory definition of videos captured on the rainy day, a video containing the target spatial area captured on a sunny day can be selected as the background image.

Optionally, a preset background image unrelated to the target spatial area can be used. The background image meets the following conditions: after fusing respective video frames for the target objects into the background image, the position change of each target object can be clearly reflected. Thus, the positional relationship between the target objects can be identified. For example, assuming that the multiple videos are all captured on a rainy day and contain the target spatial region, the target objects that need to be analyzed are determined in these multiple videos respectively. Due to the unsatisfactory definition of the videos captured on the rainy day, a video of an empty road captured on a sunny day can be selected as the background image.

Optionally, in some embodiments of the present application, at least one of the multiple videos has higher definition and/or richer original environmental information compared to other videos. The background image of the target spatial area can be constructed based on the at least one video with higher definition and/or more original environmental information, so that the synthesized video has more comprehensive background information of the target spatial area.

For example, one or more videos with appropriate exposure in the multiple videos can allow the synthesized video to have good definition. For another example, the target objects contained in at least one of the multiple videos can be complementary to the target objects contained in other videos, allowing the synthesized video to contain more comprehensive environmental information. Based on this synthesized video, the positional relationship between the target objects can be accurately analyzed.

Specifically, in the embodiment, although the time period of the first video is closer to the occurrence time of the first event, due to the fact that this video was recorded at night and has low definition, only blurred images of key person before the first event occurs can be identified from the video, and other objects that may be related to the first event in the video are still difficult to distinguish.

However, the second video of the same location was recorded during the day and has clear video image, thus the environment of the target spatial area can be clearly understood from the second video.

Therefore, optionally, the background image of the target spatial area is constructed according to the second video with higher image definition.

Exemplarily, in the embodiment, the constructed background image of the target spatial area includes buildings, roads, river guardrails on one side of the road, and several manhole covers arranged on the road surface, etc.

S22: Extracting video frames associated with the multiple target objects from the multiple videos;
For example, in the first event of the embodiment, the determined target objects include the key person in the first video, and river guardrails on one side of the road and several manhole covers arranged on the road surface in the second video.

Subsequently, the video frames associated with the determined target objects are extracted. In one implementation, target recognition can be performed on the multiple videos, from which video frames including the target objects can be determined as the video frames associated with the multiple target objects.

S23: Extracting a target image corresponding to each of the determined target objects from each of the video frames;
Specifically, the target image for each determined target object can be extracted from each video frame associated with the target object by image matting. The target image is an image area that includes the target object. For example, if the determined target objects include the key person in the first video, and river guardrails on one side of the road and several manhole covers arranged on the road surface in the second video, the target images including the key person can be extracted from the associated video frames in the first video by image matting, and the target images including the river guardrail on one side of the road and several manhole covers arranged on the road surface, are extracted from the associated video frames in the second video by image matting.

S24: Fusing each target image with the background image of the target area according to a motion time sequence of the target object, to generate multiple synthesized video frames.

Specifically, each target image is superposed with the aforementioned background image according to a motion time sequence of each of the determined target objects, to obtain the multiple synthesized video frames.

The multiple synthesized video frames constitute the synthesized video. The motion time sequence is a sequence formed by time points corresponding to video frames to which the target images belong, and each synthesized video frame corresponds to a time point in the motion time sequence.

S3: Analyzing and determining the positional relationship between the target objects based on a change in a feature parameter of a target image corresponding to each of the target objects in the synthesized video over a time sequence.

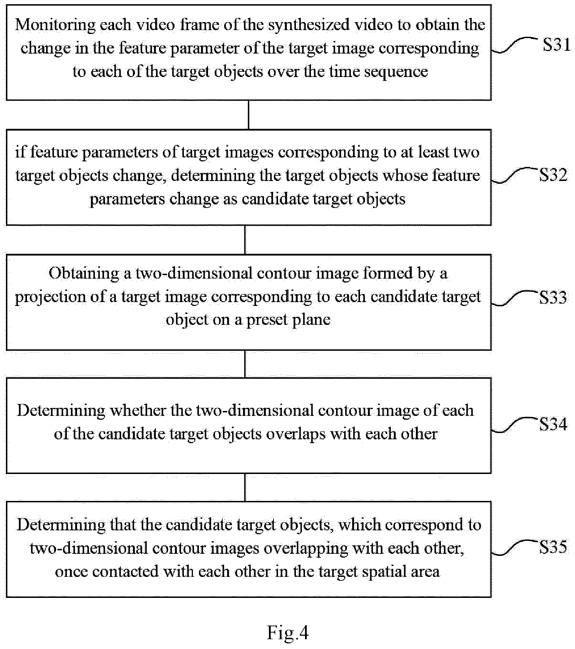

Specifically, please refer to Fig. 4. S3 specifically includes the following content:
S31: Monitoring each video frame of the synthesized video to obtain the change in the feature parameter of the target image corresponding to each of the target objects over the time sequence;
S32: if feature parameters of target images corresponding to at least two target objects change, determining the target objects whose feature parameters change as candidate target objects;
For example, the target objects can include dynamic target objects such as the key person and reference target objects such as river guardrails, manhole covers, etc.

Optionally, in order to accurately identify the potential positional relationship between the key person and other target objects, the dynamic target object, i.e., the key person, is combined with each reference target object such as river guardrails and manhole covers, to obtain multiple target object combinations.

In the synthesized video, the dynamic target object and reference target object in each target object combination move according to their respective time sequences, and the changes in the feature parameters of the target images corresponding to the target objects in each target object combination over the time sequence are monitored.

When two target objects in one target object combination overlap in space, the feature parameters of the target images corresponding to the two target objects will change.

Exemplarily, in the embodiment, the feature parameter includes transparency and/or color at the overlap of the target images corresponding to the target objects.

Specifically, if two target objects overlap, the overlapping part is equivalent to the superposition of pixel values that make up the target images for the two target objects. The superposition of pixel values results in changes in the image display effect at the overlapping part, such as changes in transparency or color. Therefore, if the transparency and/or color of a portion of or entirety of target images corresponding to two target objects in the combination change, it indicates that these two target objects overlap when moving in the synthesized video according to their respective time sequences.

That is, if the transparency and/or color of a portion of the target images corresponding to the two target objects in the combination change, it indicates that these two target objects overlap when moving in the synthesized video according to their respective time sequences. Alternatively, if the transparency and/or color of the entire target images corresponding to the two target objects in the combination change, it indicates that these two target objects overlap when moving in the synthesized video according to their respective time sequences.

Further, the target objects corresponding to the target images whose feature parameters have changed are determined as candidate target objects, and the combination in which the candidate target objects is located is a candidate target object combination.

In other words, in the embodiment, there is a possibility that the dynamic target object and the reference target object in the determined candidate target object combination once contacted with each other in the target spatial area.

Monitoring the change in the feature parameters in the form of a combination of two target objects can improve the efficiency of subsequent analysis process. It can be understood that two target objects whose feature parameters simultaneously change may not have an overlapping moment in their respective motion time sequences, for example, this is a situation where the two target objects overlap with other target objects at the same time. Therefore, in the subsequent analysis process, taking the candidate target object combination as a unit for analysis will result in a higher analysis efficiency.

S33: Obtaining a two-dimensional contour image formed by a projection of a target image corresponding to each candidate target object on a preset plane;

In order to further determine whether the candidate target objects once contacted with each other in the target spatial area, in the embodiment, optionally, a plane transformation is performed on the synthesized video based on a preset plane to obtain a two-dimensional animation containing the plane contour images of the candidate target objects. The preset plane is the ground plane or a plane parallel to the ground plane.

Exemplarily, according to the previous content, in the synthesized video, each target object is associated with a series of video frames. Therefore, taking one target object as an example, during the plane transformation, the projected image on the preset plane of the target image corresponding to the target object in each frame is obtained, and further a series of projected images which are in one-to-one correspondence with the video frames for the target object are obtained. The series of projected images can form a two-dimensional animation of the target object on the preset plane.

In one implementation, during the plane transformation, target localization can be performed on each frame by using spatial positioning technology, to obtain the spatial position coordinate (x, y, z) corresponding to the target object in the frame, and then transform the spatial position coordinate to the preset plane according to the geometric transformation relationship, thus obtaining the projected image on the preset plane of the target image corresponding to the target object.

It can be understood that in the process of analyzing two-dimensional animation, taking the candidate target object combination as a unit, the analysis result can be obtained clearly and quickly by observing the positional relationship between the plane contour images of the target objects in each candidate target object combination.

Optionally, a two-dimensional plane transformation can be performed on the video frames for the determined candidate target objects in the synthesized video based on a preset plane, to obtain a two-dimensional plane view containing the contour images of the candidate target objects.

S34: Determining whether the two-dimensional contour image of each of the candidate target objects overlaps with each other; i.e., determining whether the two-dimensional contour image of the target image corresponding to each candidate target object overlaps with each other;

Specifically, after obtaining the two-dimensional animation containing the projected images of the candidate target objects, the projection images of the two candidate target objects are caused to move on the preset plane according to their respective time sequences, and it is monitored whether the two-dimensional contour image, i.e., the projected image, of each candidate target object overlaps with each other.

S35: Determining that the candidate target objects, which correspond to two-dimensional contour images overlapping with each other, once contacted with each other in the target spatial area; i.e., determining that the candidate target objects whose two-dimensional contour images overlap, contacted with each other in the target spatial area.

For example, for each candidate target object combination, if there is an overlap between the two-dimensional contour images of the dynamic target object and the reference target object in the combination, it is determined that the dynamic target object and the reference target object in the combination once contacted with each other in the target spatial area.

In the embodiment, for example, the dynamic target object and the reference target object are the key person and a manhole cover, respectively. Based on the observation of the two-dimensional animation corresponding to the key person and the manhole cover, it can be determined whether the projected image of the key person on the ground plane overlaps with the projected image of the manhole cover on the ground plane. If it is determined that the projected image of the key person on the ground plane overlaps with the projected image of the manhole cover on the ground plane, it can be inferred that the key person may has lost his footing and fallen into the rainwater well.

The method provided in the embodiment of the present application can fuse multiple videos associated with the target spatial area into a synthesized video, and construct the background image with higher definition. Combining this background image with the target images of the determined target objects helps to improve the accuracy of the analysis result of the positional relationship between the target objects in the target spatial area. Specifically, the target images of the target objects to be analyzed are extracted from the original video, and then multiple target objects are fused with the background image to form the synthesized video. In the synthesized video, the multiple target objects move in their respective time sequences, and the positional relationship between these target objects is determined by monitoring the change in the feature parameter of each of the target objects. Specifically, for the target object combination composed of a dynamic target object and a reference target object, when images of the dynamic target object and the reference target object overlap, the projected images on the preset plane of the dynamic target object and the reference target object in the combination are further obtained to generate a two-dimensional animation containing the projected images of the dynamic target object and the reference target object. By determining whether the projection images of the dynamic target object and the reference target object overlap in the two-dimensional animation, it is determined whether the two target objects once contacted with each other in the target spatial area. Further, if there is an overlap, it indicates that the dynamic target object and the reference target object once contacted with each other in the target spatial area.

It should be noted that in other embodiments of the present application, the feature parameter may also include the shape, area, or angle, etc. of the target image.

Specifically, according to the above, it can be seen that candidate target objects whose respective target images overlap, have the possibility of direct contact with each other within the target spatial area.

Exemplarily, assume that the dynamic target object in a target object combination is a car and the reference target object in the target object combination is a roadblock, and that the car has indeed collided with the roadblock in the target spatial area. Therefore, in the process of monitoring the feature parameters of the car and roadblock in the target object combination, the monitored change in the feature parameters include: the transparency and color changes of the target images of the car and roadblock in the contact part when the car collides with the roadblock. In this case, the changing feature parameters also include angle, shape, and area. For example, if a roadblock is knocked down, an angle of the knocked down roadblock relative to the ground or other reference standards is different from that before the collision, i.e. the angle changes. For example, if a roadblock is hit and deformed, the shape of the roadblock changes. Similarly, the relevant area parameter of the roadblock that have been knocked down or damaged to deformation also changes, such as the area of the contour image of the roadblock in the target image after the collision changes.

Therefore, when one or more of the feature parameters such as transparency, color, shape, area and angle of the target images of at least two target objects change, it indicates that the target objects may have contacted with each other in the target spatial area.

The following embodiments regarding an apparatus for analyzing a positional relationship between target objects are not part of the present invention.

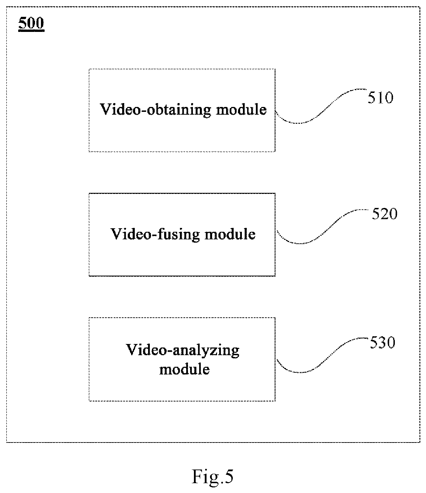

An embodiment of the present application also provides an apparatus for analyzing a positional relationship between target objects. As shown in Fig. 5, the apparatus 500 includes a video-obtaining module 510, a video-fusing module 520, and a video-analyzing module 530.

The video-obtaining module 510 is configured for obtaining multiple videos, each of which contains a video image of a target spatial area.

The video-fusing module 520 is configured for determining multiple target objects in the multiple videos and fusing the multiple videos to obtain a synthesized video containing the multiple target objects.

The video-analyzing module 530 is configured for analyzing and determining the positional relationship between the target objects based on a change in a feature parameter of a target image corresponding to each of the target objects in the synthesized video over a time sequence.

The apparatus for analyzing a positional relationship between target objects provided in the embodiment of the present application will be exemplarily described below in another scenario.

In a second event where a key person once collided with a vehicle, since the second event occurred at night, it is difficult to determine the contact between the key person and oncoming and outgoing vehicles from the video captured during the time period of the second event.

Therefore, two videos can be taken from the camera device at the event site, i.e., in the target spatial area. The first video is a video captured during the time period of the second event. The second video is a video before the second event occurred. In this video, a car once turned on its high beams and passed through an accident road section where the second event happened, with the light illuminating the road.

The first and second videos are uploaded to the apparatus 500 provided in the embodiment of the present application.

The video-obtaining module 510 obtains the first and second videos.

The video-fusing module 520 constructs a background image of the accident road section.

Optionally, in the embodiment, since the second video was captured when illuminated by high beams and has higher definition, the background image of the accident road section is constructed mainly based on the relevant video frames illuminated by high beams in the second video.

Further, the video-fusing module 520 determines multiple target objects related to the second event in the first and second videos, and extracts video frames associated with each of the target objects.

Exemplarily, in the embodiment, the determined target objects include oncoming and outgoing vehicles and the key person in the first video. Moreover, the oncoming and outgoing vehicles are dynamic target objects, the key person is a reference target object, and the combination of the key person and each vehicle results in multiple target object combinations.

Subsequently, the video-fusing module 520 extracts the target image corresponding to each of the determined target objects from each video frame.

Further, the video-fusing module 520 fuses each target image corresponding to each target object with the background image according to the motion time sequence of the target object, to generate multiple synthesized video frames. The multiple synthesized video frames construct the synthesized video, wherein each synthesized video frame corresponds to a time point in the motion time sequence.

It can be understood that the second video can be used as light-supplementing material to supplement the missing ambient light in the first video, in order to improve the exposure and definition of the synthesized video.

Based on the synthesized video, the video-analyzing module 530 monitors each video frame of the synthesized video to obtain the change in a feature parameter of the target image corresponding to each target object over the time sequence.

Specifically, the video-analyzing module 530 monitors each video frame of the synthesized video to obtain the change in a feature parameter of each target object over the time sequence. The target object can be a vehicle, a key person, etc.

In the embodiment, the feature parameter can include at least one of transparency, color, angle, area, and shape.

If the feature parameters of the target images corresponding to at least two of the target objects change, target objects whose feature parameters change are determined as candidate target objects, and the video-analyzing module 530 determines a combination of the target objects as a candidate target object combination. For example, if one or more of feature parameters of a vehicle and a key person in a target object combination changes over the time sequence, video-analyzing module 530 determines the target object combination as the candidate target object combination.

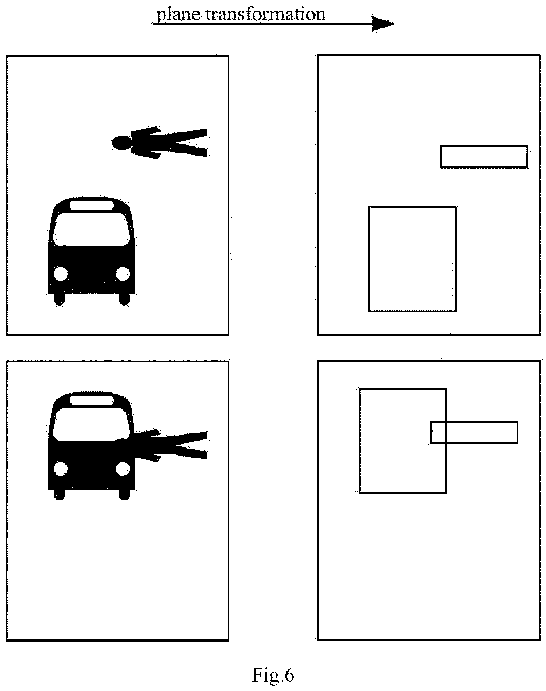

Furthermore, the video-analyzing module 530 performs a plane transformation on the synthesized video for the candidate target objects, namely, the vehicle and key person, and the effect of the plane transformation is shown in Fig. 6. It should be noted that the perspective of the two images on the left in Fig. 6 is different from that of the two images on the right. The two-dimensional contour images in the two images on the right are the projected images of the vehicle and key person in the two images on the left on the ground plane.

Specifically, the video-analyzing module 530 obtains a two-dimensional contour image formed by the projection of the target image corresponding to each candidate target object on a preset plane, such as a ground plane, and determines whether the two-dimensional contour image of the target image corresponding to each candidate target object overlays with each other, and determine that the candidate target objects corresponding to the two-dimensional contour images overlapping with each other, once contacted with each other in the target spatial area.

Optionally, for a candidate target object combination, if the two-dimensional contour images of the vehicle and key person in the combination overlap with each other, the video-analyzing module 530 determines that the vehicle and key person in the candidate target object combination once contacted with each other on the accident road section.

Based on this, the contact between the key person and oncoming and outgoing vehicles during the event period can be determined from the synthesized video, thereby determining the vehicle that collided with the key person.

The embodiments of the apparatus described above are only schematic, wherein the units described as separate components may be or may not be physically separated, and the components displayed as units may be or may not be physical units, that is, can be located in one place or distributed across multiple network units. Some or all modules can be selected according to actual needs to achieve the purpose of this embodiment. A person of ordinary skill in the art can understand and implement the present application without any creative effort.

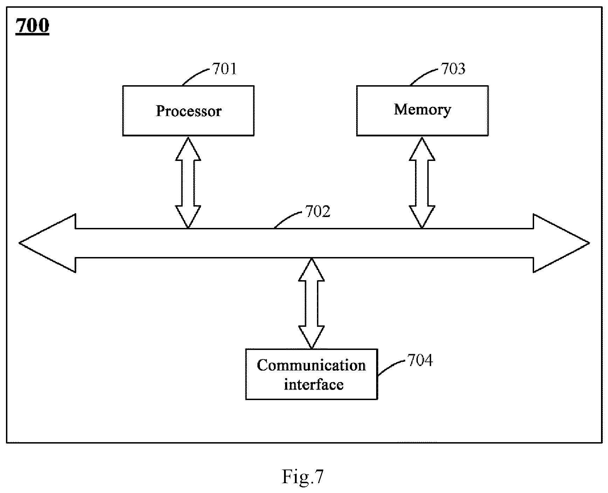

The embodiment of the present application also provides an electronic device, as shown in Fig. 7. The electronic device 700 includes a processor 701, a communication interface 704, a memory 703, and a communication bus 702. The processor 701, communication interface 704, and memory 703 communicate with each other through communication bus 702. Processor 701 can call logical instructions in memory 703 to perform the steps in the method for analyzing a positional relationship between target objects described above.

It should be understood that the above processor can be Central Processing Unit (CPU), or can be other general-purpose processors, Digital Signal Processor (DSP), Application Specific Integrated Circuit (ASIC), etc. A general-purpose processor can be a microprocessor or any conventional processor, etc. The steps of the method disclosed in combination with the invention can be directly embodied in the hardware processor or the combination of hardware and software modules in the processor.

A bus can be an Industry Standard Architecture (ISA) bus, a Peripheral Component (PCI) bus, or an Extended Industry Standard Architecture (EISA) bus. The bus can be divided into address bus, data bus, control bus, etc. For the convenience of representation, the bus in the attached drawings of the present application is not limited to only one bus or one type of bus.

An embodiment of the present application also provides a non-volatile computer readable storage medium having a computer program stored thereon, where the computer program, when executed by the processor, carries out the steps in the method for analyzing a positional relationship between target objects.

An embodiment of the present application also provides a computer program product containing instructions, which, when run on a computer, causes the computer to carry out the steps of the method for analyzing a positional relationship between target objects mentioned above.

A person of ordinary skill in the art should understand that all or part of the process in the above embodiment of the method for analyzing a positional relationship between target objects can be implemented through hardware and/or software related to computer program instructions. The computer program can be stored in a non-volatile computer readable storage medium, and the computer program, when executed, can carry out the processes in the above method embodiments. Any reference to memory, storage, database, or other media used in the embodiments provided in the present application can include non-volatile and/or volatile memory. The non-volatile memory can include read-only memory (ROM), programmable ROM (PROM), electrically programmable ROM (EPROM), electrically erasable programmable ROM (EEPROM), or flash memory. The volatile memory can include random access memory (RAM) or external cache memory. As an explanation rather than limitation, RAM is available in various forms, such as static RAM (SRAM), dynamic RAM (DRAM), synchronous DRAM (SDRAM), enhanced SDRAM (ESDRAM), memory bus (Rambus), direct RAM (RDRAM), direct memory bus dynamic RAM (DRDRAM), and memory bus dynamic RAM (RDRAM).

In summary, the embodiments of the present application provide a method and an apparatus for analyzing a positional relationship between target objects, a storage medium and an electronic device. When analyzing a certain event, with the embodiments of the present application, multiple videos associated with the target spatial area are fused to obtain a synthesized video with good definition, which contains all possible information related to the event, such as all target objects to be analyzed related to the event in the target spatial area. Specifically, in the embodiments of the present application, the positional relationship between target objects in the target spatial area is analyzed by monitoring the change in the feature parameter of the target image corresponding to each target object in the synthesized video over the time sequence.

Finally, it should be noted that the above embodiments are only used to illustrate the technical solution of the present application, not to limit it.

## Claims

1. A computer-implemented method for analyzing a positional relationship between target objects, wherein the method comprises:
obtaining (S1) multiple videos, each of which contains a video image of a target spatial area;
determining multiple target objects in the multiple videos and fusing (S2) the multiple videos to obtain a synthesized video containing the multiple target objects;
analyzing and determining (S3) the positional relationship between the target objects based on a change in a feature parameter of a target image corresponding to each of the target objects in the synthesized video over a time sequence, comprising:
monitoring (S31) each video frame of the synthesized video to obtain the change in the feature parameter of the target image corresponding to each of the target objects over the time sequence;
if feature parameters of target images corresponding to at least two target objects change, determining (S32) the target objects whose feature parameters change as candidate target objects;
obtaining (S33) a two-dimensional contour image formed by a projection of a target image corresponding to each of the candidate target objects on a preset plane;
determining (S34) whether the two-dimensional contour image of the target image corresponding to each of the candidate target objects overlaps with each other;
determining (S35) that the candidate target objects, which correspond to two-dimensional contour images overlapping with each other, contacted with each other in the target spatial area.

2. The method as claimed in claim 1, wherein, determining the multiple target objects in the multiple videos and fusing the multiple videos to obtain the synthesized video containing the multiple target objects comprises:
constructing a background image;
extracting video frames associated with the multiple target objects from the multiple videos;
extracting a target image corresponding to each of the determined target objects from each of the video frames;
fusing each target image with the background image according to a motion time sequence of the target object, to generate multiple synthesized video frames, wherein the multiple synthesized video frames constitute the synthesized video, wherein each of the multiple synthesized video frames corresponds to a time point in the motion time sequence.

3. The method as claimed in claim 2, wherein, at least one video of the multiple videos has higher definition and/or more original environmental information relative to other videos, and constructing the background image comprises constructing the background image of the target spatial area according to the at least one video with higher definition and/or more original environmental information.

4. The method as claimed in claim 1, wherein, the feature parameter comprises at least one of: transparency, color, shape, area, and angle relative to a reference standard of the target image corresponding to the target object in video frames of the synthesized video.

5. A non-volatile computer-readable storage medium, wherein, the non-volatile computer-readable storage medium stores a computer program that, when executed by a computer, causes the computer to carry out the method for analyzing a positional relationship between target objects as claimed in any one of claims 1 to 4.

6. An electronic device (700), comprising a memory (703), a processor (701), and a computer program that is stored on the memory (703) and can run on the processor (701), wherein, when the processor (701), when executing the computer program, carries out the method for analyzing a positional relationship between target objects as claimed in any one of claims 1 to 4.

7. A computer program product containing instructions, which, when run on a computer, causes the computer to carry out the method for analyzing a positional relationship between target objects as claimed in any one of claims 1 to 4.

## Patentansprüche

1. Ein computerimplementiertes Verfahren zur Analyse einer Positionsbeziehung zwischen Zielobjekten, wobei das Verfahren umfasst:
Erfassen (S1) mehrerer Videos, von denen jedes ein Videobild eines räumlichen Zielbereichs enthält;
Bestimmen mehrerer Zielobjekte in den mehreren Videos und Zusammenführen (S2) der mehreren Videos, um ein synthetisiertes Video zu erhalten, das die mehreren Zielobjekte enthält;
Analysieren und Bestimmen (S3) der Positionsbeziehung zwischen den Zielobjekten auf der Grundlage einer Änderung eines Merkmalsparameters eines Zielbildes, das jedem der Zielobjekte in dem synthetisierten Video entspricht, über eine Zeitsequenz, umfassend:
Überwachen (S31) jedes Videoeinzelbildes des synthetisierten Videos, um die Änderung des Merkmalsparameters des Zielbildes, das jedem der Zielobjekte entspricht, über die Zeitsequenz zu erhalten;
wenn sich Merkmalsparameter von Zielbildern, die mindestens zwei Zielobjekten entsprechen, ändern, Bestimmen (S32) der Zielobjekte, deren Merkmalsparameter sich ändern, als Kandidaten-Zielobjekte;
Erhalten (S33) eines zweidimensionalen Konturbildes, das durch eine Projektion eines jedem der Kandidaten-Zielobjekte entsprechenden Zielbildes auf eine vorgegebene Ebene gebildet wird;
Bestimmen (S34), ob sich das zweidimensionale Konturbild des jedem der Kandidaten-Zielobjekte entsprechenden Zielbildes gegenseitig überlappen;
Bestimmen (S35), dass die Kandidaten-Zielobjekte, die sich gegenseitig überlappenden zweidimensionalen Konturbildern entsprechen, im räumlichen Zielbereich miteinander in Kontakt stehen.

2. Verfahren nach Anspruch 1, wobei das Bestimmen der mehreren Zielobjekte in den mehreren Videos und das Zusammenführen der mehreren Videos, um das synthetisierte Video zu erhalten, das die mehreren Zielobjekte enthält, umfasst:
Erstellen eines Hintergrundbildes;
Extrahieren von Videoeinzelbildern, die den mehreren Zielobjekten zugeordnet sind, aus den mehreren Videos;
Extrahieren eines Zielbildes, das jedem der ermittelten Zielobjekte entspricht, aus jedem der Videoeinzelbilder;
Zusammenführen jedes Zielbildes mit dem Hintergrundbild gemäß einer Bewegungszeitsequenz des Zielobjekts, um mehrere synthetisierte Videoeinzelbilder zu erzeugen, wobei die mehreren synthetisierten Videoeinzelbilder das synthetisierte Video bilden, wobei jedes der mehreren synthetisierten Videoeinzelbilder einem Zeitpunkt in der Bewegungszeitsequenz entspricht.

3. Verfahren nach Anspruch 2, wobei mindestens eines der mehreren Videos im Vergleich zu den anderen Videos eine höhere Auflösung und/oder mehr ursprüngliche Umgebungsinformationen aufweist und das Erstellen des Hintergrundbildes ein Erstellen des Hintergrundbildes des räumlichen Zielbereichs auf der Grundlage des mindestens einen Videos mit höherer Auflösung und/oder mehr ursprünglichen Umgebungsinformationen umfasst.

4. Verfahren nach Anspruch 1, wobei der Merkmalsparameter mindestens eines umfasst aus: Transparenz, Farbe, Form, Fläche und Winkel relativ zu einem Referenzstandard des Zielbildes, das dem Zielobjekt in den Videoeinzelbildern des synthetisierten Videos entspricht.

5. Ein nichtflüchtiges, computerlesbares Speichermedium, wobei das nichtflüchtige, computerlesbare Speichermedium ein Computerprogramm speichert, das, wenn es von einem Computer ausgeführt wird, den Computer veranlasst, das Verfahren zur Analyse einer Positionsbeziehung zwischen Zielobjekten gemäß einem der Ansprüche 1 bis 4 durchzuführen.

6. Ein elektronisches Gerät (700), das einen Speicher (703), einen Prozessor (701), und ein Computerprogramm, das in dem Speicher (703) gespeichert ist und auf dem Prozessor (701) ausgeführt werden kann, wobei der Prozessor (701) bei der Ausführung des Computerprogramms das Verfahren zur Analyse einer Positionsbeziehung zwischen Zielobjekten gemäß einem der Ansprüche 1 bis 4 durchführt.

7. Ein Computerprogrammprodukt, das Anweisungen enthält, die, wenn sie auf einem Computer ausgeführt werden, den Computer veranlassen, das Verfahren zur Analyse einer Positionsbeziehung zwischen Zielobjekten gemäß einem der Ansprüche 1 bis 4 durchzuführen.

## Revendications

1. Un procédé mis en œuvre par ordinateur pour analyser une relation de position entre des objets cibles, dans lequel le procédé comprend:
obtenir (S1) multiples vidéos, chacune contenant une image vidéo d'une zone spatiale cible;
déterminer de multiples objets cibles dans les multiples vidéos et fusionner (S2) les multiples vidéos pour obtenir une vidéo synthétisée contenant les multiples objets cibles;
analyser et déterminer (S3) la relation de position entre les objets cibles sur la base d'une variation d'un paramètre caractéristique d'une image cible correspondant à chacun des objets cibles dans la vidéo synthétisée sur une séquence temporelle, comprenant:
surveiller (S31) chaque image vidéo de la vidéo synthétisée pour obtenir la variation du paramètre caractéristique de l'image cible correspondant à chacun des objets cibles sur la séquence temporelle;
si les paramètres caractéristiques des images cibles correspondant à au moins deux objets cibles changent, déterminer (S32) les objets cibles dont les paramètres caractéristiques changent en tant qu'objets cibles candidats;
obtenir (S33) une image de contour bidimensionnelle formée par une projection d'une image cible correspondant à chacun des objets cibles candidats sur un plan prédéfini;
déterminer (S34) si les images de contour bidimensionnelles des images cibles correspondant à chacun des objets cibles candidats se chevauchent;
déterminer (S35) que les objets cibles candidats, qui correspondent à des images de contour bidimensionnelles se chevauchant, sont en contact les uns avec les autres dans la zone spatiale cible.

2. Le procédé selon la revendication 1, dans lequel déterminer les multiples objets cibles dans les multiples vidéos et fusionner les multiples vidéos pour obtenir la vidéo synthétisée contenant les multiples objets cibles comprend:
construire une image d'arrière-plan;
extraire des images vidéo associées aux multiples objets cibles à partir des multiples vidéos;
extraire une image cible correspondant à chacun des objets cibles déterminés à partir de chacune des images vidéo;
fusionner chaque image cible avec l'image d'arrière-plan selon une séquence temporelle de mouvement de l'objet cible, afin de générer plusieurs images vidéo synthétisées, dans lesquelles les plusieurs images vidéo synthétisées constituent la vidéo synthétisée, dans laquelle chacune des plusieurs images vidéo synthétisées correspond à un point temporel dans la séquence temporelle de mouvement.

3. Le procédé selon la revendication 2, dans lequel au moins une vidéo des multiples vidéos présente une définition plus élevée et/ou davantage d'informations environnementales d'origine par rapport aux autres vidéos, et construire l'image d'arrière-plan comprend construire l'image d'arrière-plan de la zone spatiale cible selon au moins une vidéo présentant une définition plus élevée et/ou davantage d'informations environnementales d'origine.

4. Le procédé selon la revendication 1, dans lequel le paramètre caractéristique comprend au moins l'un parmi: transparence, couleur, forme, surface et angle par rapport à une norme de référence de l'image cible correspondant à l'objet cible dans les images de la vidéo synthétisée.

5. Un média de stockage non volatile lisible par ordinateur, dans lequel le média de stockage non volatile lisible par ordinateur stocke un programme d'ordinateur qui, lorsqu'il est exécuté par un ordinateur, amène l'ordinateur à mettre en œuvre le procédé pour analyser une relation de position entre des objets cibles, selon l'une quelconque des revendications 1 à 4.

6. Un dispositif électronique (700), comprenant une mémoire (703), un processeur (701) et un programme d'ordinateur qui est stocké dans la mémoire (703) et peut s'exécuter sur le processeur (701), dans lequel, lorsque le processeur (701), lorsqu'il exécute le programme d'ordinateur, met en œuvre le procédé pour analyser une relation de position entre des objets cibles selon l'une quelconque des revendications 1 à 4.

7. Un produit d'ordinateur contenant des instructions qui, lorsqu'elles sont exécutées sur un ordinateur, amènent l'ordinateur à mettre en œuvre le procédé pour analyser une relation de position entre des objets cibles selon l'une quelconque des revendications 1 à 4.
